# EUROPEAN PATENT SPECIFICATION

(11) **EP 4 007 022 B1**
(45) Date of publication and mention of the grant of the patent: **09.12.2026**
(21) Application number: 20846558.3
(22) Date of filing: 28.05.2020
(51) Int. Cl.: H01M 10/04, H01M 4/66, H01M 50/136

(54) **SECONDARY BATTERY**
SEKUNDÄRBATTERIE
BATTERIE SECONDAIRE

(30) Priority: 29.07.2019 KR 20190091791
(43) Date of publication of application: 01.06.2022
(73) Proprietor: Samsung SDI Co., Ltd., Yongin-si, Gyeonggi-do 17084 (KR)
(72) Inventor: PARK, Seung Hee, Yongin-si, Gyeonggi-do 17084 (KR); LEE, Jea Woan, Yongin-si, Gyeonggi-do 17084 (KR)
(74) Representative: Marks & Clerk LLP
(86) International application number: PCT/KR2020/006939
(87) International publication number: WO 2021/020708

(56) References cited:
- WO-A1-2006/109610
- JP-A- H1 167 172
- KR-A- 20140 079 031
- KR-A- 20170 036 203
- KR-B1- 101 613 499
- US-A1- 2013 323 563
- US-A1- 2016 365 544
- US-A1- 2017 025 723

## Description

### TECHNICAL FIELD

Various embodiments of the present invention relate to a secondary battery.

### BACKGROUND ART

In general, an electronic device, such as a notebook computer, a mini notebook computer, a net book, a mobile computer, an ultra-mobile personal computer (UMPC) or a portable multimedia player (PMP), uses a battery pack as a portable power source, and the battery pack may have a plurality of battery cells connected in series and/or in parallel. The battery pack may include a protective circuit module (PCM) for protecting battery cells against over-charge, over-discharge, or over-current, and the secondary battery and the protective circuit module may be housed together in a case.

The above information disclosed in this Background section is only for enhancement of understanding of the background of the invention and therefore it may contain information that does not constitute prior art.

Secondary batteries are known in the art. See, for example, US2016/365544 A1 and US2017/025723 A1.

### DESCRIPTION OF EMBODIMENTS

### TECHNICAL PROBLEM

The present invention provides a secondary battery in which an electrode assembly is formed to be foldable by providing a connection structure for connecting two electrode assemblies in parallel or in series in one case.

### SOLUTION TO PROBLEM

A secondary battery is as defined in the appended claims.

The secondary battery may be configured such that upon folding of the case, folded portions of the cover may be in close contact with each other.

The case may further include a bonding portion that extends along an edge of the open one side of the accommodating portion so as to extend parallel with the cover coupled thereto.

The secondary battery may be configured such that when the case is folded, the bonding portion and the cover may have cutout grooves formed by cut end portions corresponding to the folded portions.

The first electrode plate may be a positive electrode plate having an aluminum substrate, and the second electrode plate may be a negative electrode plate having a copper substrate.

The positive electrode connection tab of the first electrode assembly may include a substrate contact portion connected to the aluminum substrate and a connection portion integrally formed with the substrate contact portion and exposed to one side of the first electrode assembly, and the negative electrode connection tab of the first electrode assembly may include a substrate contact portion connected to the copper substrate and a connection portion integrally formed with the substrate contact portion and exposed to one side of the first electrode assembly. The positive electrode connection tab of the second electrode assembly may include a substrate contact portion connected to the aluminum substrate and a connection portion integrally formed with the substrate contact portion and exposed to the first electrode assembly, and the negative electrode connection tab of the second electrode assembly may include a substrate contact portion connected to the copper substrate and a connection portion integrally formed with the substrate contact portion and exposed to the first electrode assembly.

The positive electrode connection tab and the negative electrode connection tab may include one or two of positive and negative electrode connection tabs, respectively.

The connection tab connected to the first electrode assembly and the connection tab connected to the second electrode assembly may overlap each other.
the connection tab connected to the first electrode assembly and the connection tab connected to the second electrode assembly may be disposed to have a step difference from each other.

An insulating tape may be attached to a coupling portion of the connection tab connected to the first electrode assembly and the connection tab connected to the second electrode assembly.

The first electrode assembly and the second electrode assembly may be connected to each other in parallel.

The first electrode assembly and the second electrode assembly may be connected to each other in series, and the accommodating space may be divided into two to accommodate the first electrode assembly and the second electrode assembly, respectively, so as not to allow the electrolytes of the first electrode assembly and the second electrode assembly to communicate with each other.

### ADVANTAGEOUS EFFECTS OF DISCLOSURE

In the secondary battery according to an embodiment of the present invention, two electrode assemblies are connected to each other in parallel or in series in one case, and each electrode assembly is connected to be foldable by using a general tab or a substrate tab. Accordingly, folding of the secondary battery is enabled, and the durability of the folded portions can be secured.

That is, an embodiment of the present invention provides a secondary battery which is formed to be foldable by providing a connection structure for connecting two electrode assemblies to each other in parallel or in series in one case.

### BRIEF DESCRIPTION OF DRAWINGS

FIG. 1 is a combined perspective view illustrating a folded state of a secondary battery according to an embodiment of the present invention.
FIG. 2 is a combined perspective view illustrating an unfolded state of the secondary battery of FIG. 1.
FIG. 3 is an exploded perspective view of the secondary battery of FIG. 2.
FIG. 4 is a plan view illustrating an electrode assembly of the secondary battery shown in FIG. 3.
FIG. 5 is a plan view illustrating a connection state of the electrode assembly shown in FIG. 4.
FIGS. 6 and 7 are plan views illustrating various types of electrode assemblies according to the present invention.
FIGS. 8A to 10C are cross-sectional views illustrating various connection forms and folding processes of an electrode assembly according to an embodiment of the present invention.
FIG. 11 is a plan view illustrating an electrode assembly of a secondary battery according to another embodiment of the present invention.
FIGS. 12A to 12C are cross-sectional views illustrating various connection forms and folding processes of an electrode assembly according to another embodiment of the present invention.

### BEST MODE

Hereinafter, exemplary embodiments of the present invention will be described in detail.

The embodiments of the present invention, however, may be embodied in many different forms and should not be construed as being limited to the example (or exemplary) embodiments set forth herein. Rather, these example embodiments are provided so that this disclosure will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise" and/or "comprising" when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

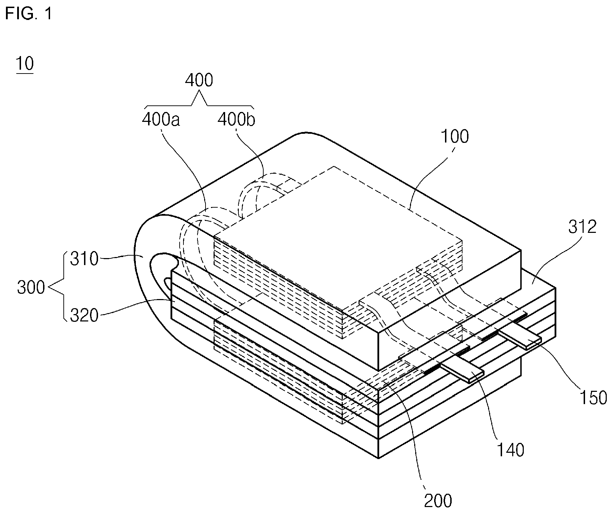

In describing major features of the present invention, for convenience, the upper side is defined as an upward direction and the lower side is defined as a downward direction with reference to FIG. 1. In addition, with reference to FIG. 1, a long side direction of a case is defined as a longitudinal direction, a short side direction of the case is defined as a width direction, a direction toward the outside of the case is defined as an outward direction, and a direction toward the accommodating space of the case is defined as an inward direction. Therefore, coupling relationships of various components include all concepts that may change correspondingly when such arrangement directions are changed.

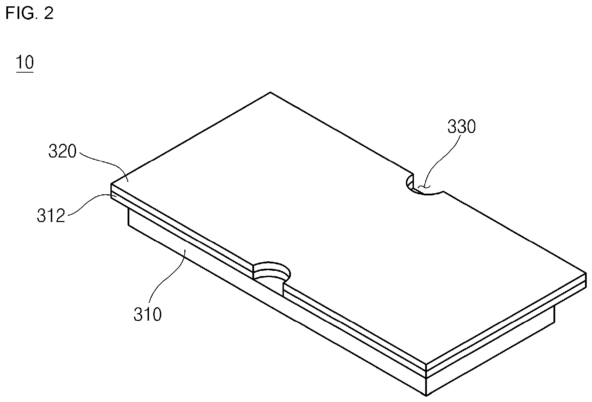

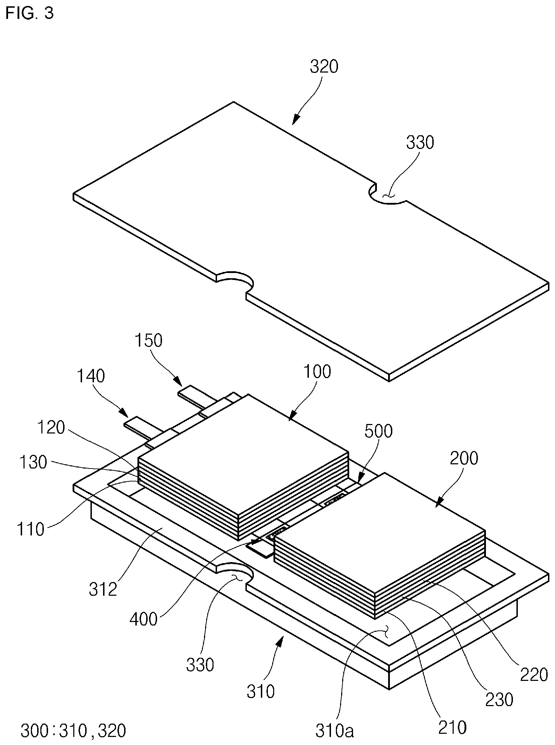

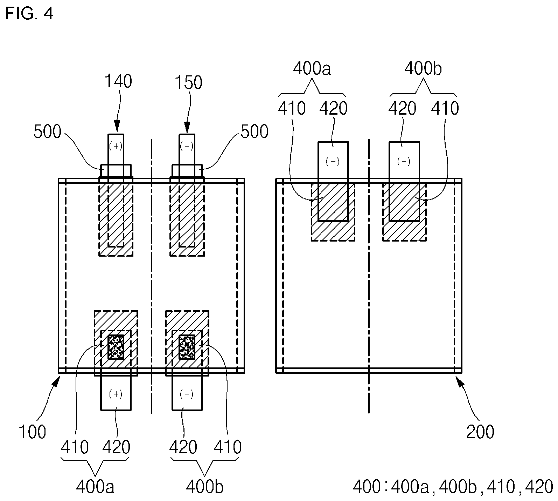

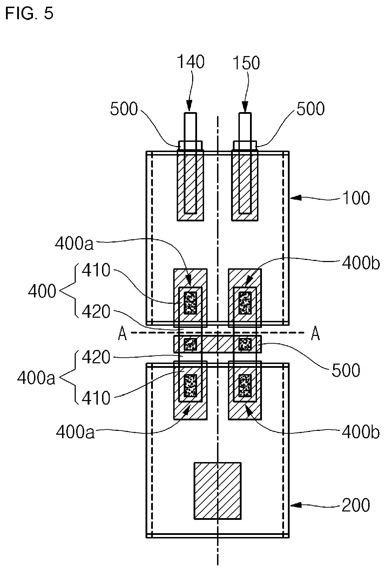

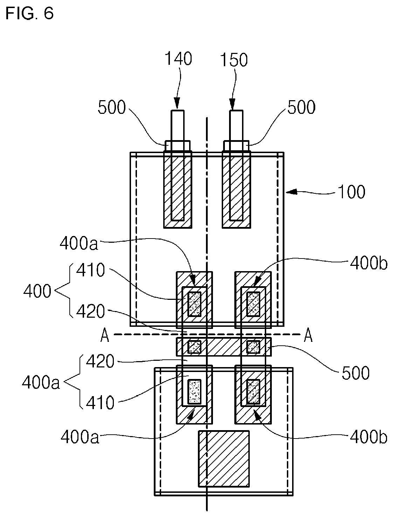

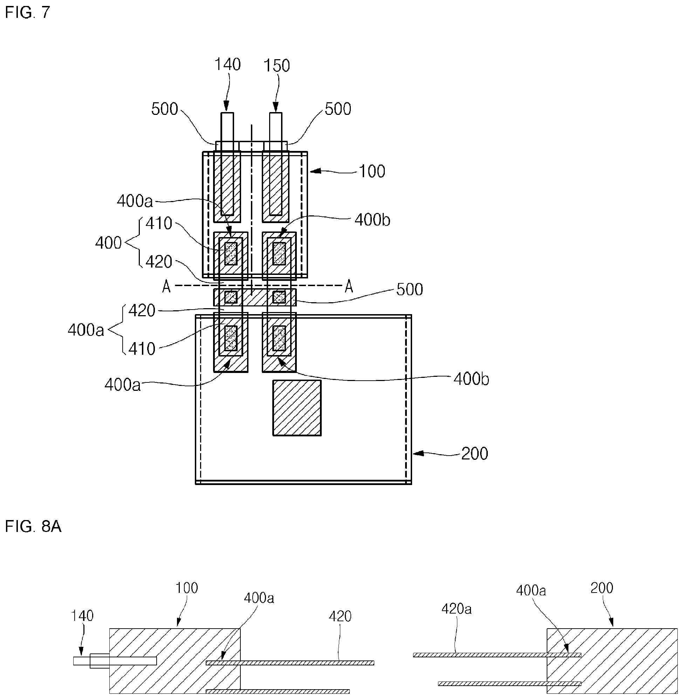

FIG. 1 is a combined perspective view illustrating a folded state of a secondary battery according to an embodiment of the present invention. FIG. 2 is a combined perspective view illustrating an unfolded state of the secondary battery of FIG. 1. FIG. 3 is an exploded perspective view of the secondary battery of FIG. 2. FIG. 4 is a plan view illustrating an electrode assembly of the secondary battery shown in FIG. 3. FIG. 5 is a plan view illustrating a connection state of the electrode assembly shown in FIG. 4. FIGS. 6 and 7 are plan views illustrating various types of electrode assemblies according to the present invention.

As shown in FIGS. 1 to 3, a secondary battery 10 according to an embodiment of the present invention includes two electrode assemblies 100 and 200, a case 300 for accommodating the electrode assemblies 100 and 200 and an electrolyte, and a connection tab 400 connecting the two electrode assemblies 100 and 200 to each other. Any one of the two electrode assemblies 100 and 200 includes a first tab 140 and a second tab 150 respectively drawn out from the electrode assemblies 100 and 200. An insulating tape 500 may be attached to the first tab 140, the second tab 150, and the connection tab 400.

For convenience, one of the electrode assemblies 100 and 200 provided with the first tab 140 and the second tab 150 is defined as a first electrode assembly 100, and the other is defined as a second electrode assembly 200.

As shown in FIGS. 1 and 3 to 5, the first electrode assembly 100 may be formed by winding a unit laminate including a first electrode plate 110, a second electrode plate 120, and a separator 130 that physically separates the first electrode plate 110 and the second electrode plate 120 from each other, or by laminating a plurality of layers. The first tab 140 and the second tab 150 may be electrically connected to any one of the first electrode plate 110 and the second electrode plate 120, respectively.

The first electrode plate 110 may be a positive electrode plate made of a mixture including an aluminum substrate and an active material. The second electrode plate 120 may be a negative electrode plate made of a mixture including a copper substrate and an active material. However, the first electrode plate 110 may be a negative electrode plate and the second electrode plate 120 may be a positive electrode plate. The separator 130 may include a plurality of separators, which are respectively inserted between a plurality of first electrode plates 110 and a plurality of second electrode plates 120. The separator 130 is an insulator that prevents a short circuit between the first electrode plate 110 and the second electrode plate 120.

The first tab 140 is electrically connected to the first electrode plate 110, and the second tab 150 is electrically connected to the second electrode plate 120. One end of each of the first tab 140 and the second tab 150 partially protrudes to the outside of the first electrode plate 110 and the second electrode plate 120 to electrically connect the electrode assemblies 100 and 200 to the outside. When the first electrode plate 110 is a positive electrode plate, the first tab 140 may become a positive electrode tab, and when the second electrode plate 120 is a negative electrode plate, the second tab 150 may become a negative electrode tab. The first tab 140 and the second tab 150 are spaced apart from each other by a predetermined distance and are drawn out in the same direction.

In the first tab 140 and the second tab 150, the insulating tape 500 may be attached to portions serving as a boundary drawn out of the case 300 or to one inner surface including the boundary portions (a surface that does not contact the first electrode plate and the second electrode plate). The insulating tape 500 prevents a short circuit between the first tab 140 and the second tab 150.

As shown in FIGS. 1 and 3 to 5, the second electrode assembly 200 is connected in parallel to the first electrode assembly 100 by the connection tab 400, which will later be described. The second electrode assembly 200 includes a first electrode plate 210, a second electrode plate 220, and a separator 230, like the first electrode assembly 100, except for the first tab 140 and the second tab 150. The second electrode assembly 200 may be formed to have the same size and capacity as the first electrode assembly 100, or may be formed to have a different size and capacity from the first electrode assembly 100 (see FIGS. 6 and 7).

When the first electrode assembly 100 and the second electrode assembly 200 have the same size and capacity, as shown in FIG. 5, the connection tab 400 may be disposed at the center of the first electrode assembly 100 and the second electrode assembly 200. As shown in FIG. 6, when the size and capacity of the first electrode assembly 100 are larger than those of the second electrode assembly 200, the connection tab 400 may be disposed at one side of the first electrode assembly 100 and at the center of the second electrode assembly 200. Conversely, as shown in FIG. 7, when the size and capacity of the second electrode assembly 200 are larger than those of the first electrode assembly 100, the connection tab 400 may be disposed at one side of the second electrode assembly 200 and at the center of the first electrode assembly 100.

The first electrode assembly 100 and the second electrode assembly 200 are accommodated in the case 300 while being connected to the connection tab 400.

As shown in FIGS. 1 to 3, the case 300 may include an accommodating portion 310 that forms an accommodating space 310a and a cover 320 that covers one surface of the accommodating portion 310. The case 300 accommodates the first electrode assembly 100 and the second electrode assembly 200 together with an electrolyte. The case 300 is welded to and sealed with the cover 320 in a state in which the first electrode assembly 100 and the second electrode assembly 200 are accommodated therein. The case 300 is folded so that one side of the cover 320 is in surface contact with the other side.

The accommodating portion 310 may have a box shape in which one side thereof is opened to form the accommodating space 310a. The accommodating space 310a has a size and shape corresponding to those of the first electrode assembly 100 and the second electrode assembly 200. A bonding portion 312 that outwardly vertically extends from an end of the accommodating portion 310 is formed along the edge of the open one side of the accommodating portion 310.

The bonding portion 312 is a portion bonded to the cover 320 by various methods such as fusion or adhesion. When the accommodating portion 310 is folded, cutout grooves 330 are formed in the bonding portion 312 to correspond to the positions of the folded portions.

The cutout grooves 330 are grooves having a semicircular shape or a 'V' shape, and are formed by cutting portions of the end of the bonding portion 312. When the case 300 is folded in half, the thickness of the folded portion of the bonding portion 312 and the cover 320 may be increased, and thus wrinkles or lifting may occur. If the folded portion is lifted or wrinkled, the case 300 may not be completely folded and the folding state may be released. Therefore, in order to prevent this problem, the cutout grooves 330 are formed in the bonding portion 312 corresponding to the portion where the case 300 is folded.

The shapes of the cutout grooves 330 are not limited to the above-described semicircular or V' shape as long as the folding portion of the case 300 can be smoothly folded.

Since the cover 320 covers the open one side of the accommodating portion 310, the cover 320 has a rectangular plate shape corresponding to the size and shape of the accommodating portion 310 and the bonding portion 312. The edge of the cover 320 is bonded to the bonding portion 312, thereby fixing the accommodating portion 310 and the cover 320.

When the case 300 is folded in half, the cover 320 is folded together with the accommodating portion 310. Accordingly, the cutout grooves 330 having the same shape as the cutout grooves 330 are formed on the cover 320 at the positions of the end of the case 300 where the cutout grooves 330 are formed.

When the case 300 is folded in half, the cover 320 may have one end and the other end of the outer surface in close contact with each other, and the folding portions may also be in close contact with each other.

As described above, when the case 300 is completely folded in half, in order to stably maintain an electrically connected state between the first electrode assembly 100 and the second electrode assembly 200, the flexible connection tab 400 is essentially required.

As shown in FIGS. 1, 4, and 5, the connection tab 400 is disposed between the first electrode assembly 100 and the second electrode assembly 200. The connection tab 400 is provided in the first electrode assembly 100 and the second electrode assembly 200, respectively, and is composed of two tabs of a positive electrode connection tab 400 and a negative electrode connection tab 400. That is, each of the first electrode assembly 100 and the second electrode assembly 200 includes a pair of connection tabs 400.

The positive electrode connection tab 400 is electrically connected to the aluminum substrate provided on the first electrode plate 110 of each of the first electrode assembly 100 and the second electrode assembly 200. The negative electrode connection tab 400 is electrically connected to the copper substrate provided on the second electrode plate 120 of each of the first electrode assembly 100 and the second electrode assembly 200.

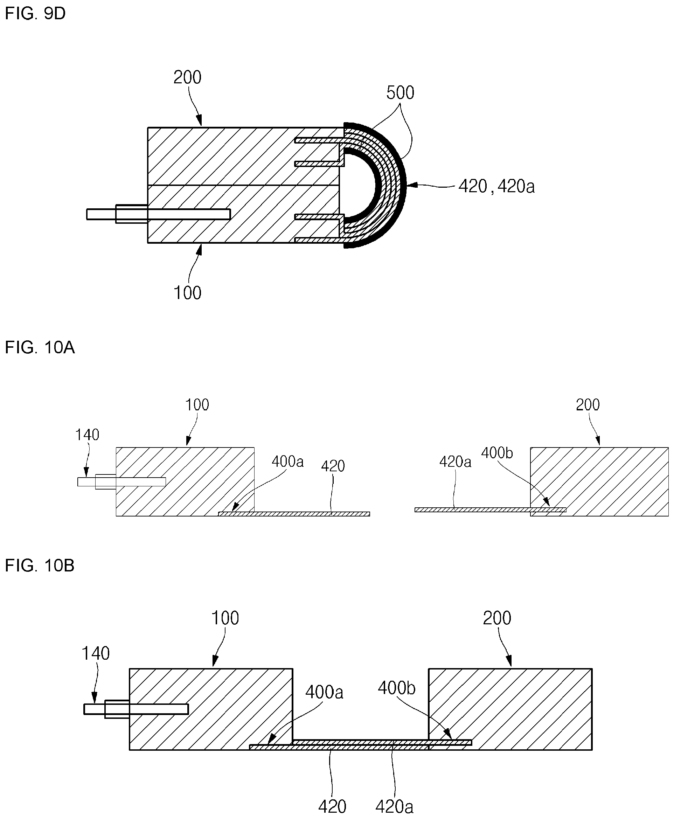

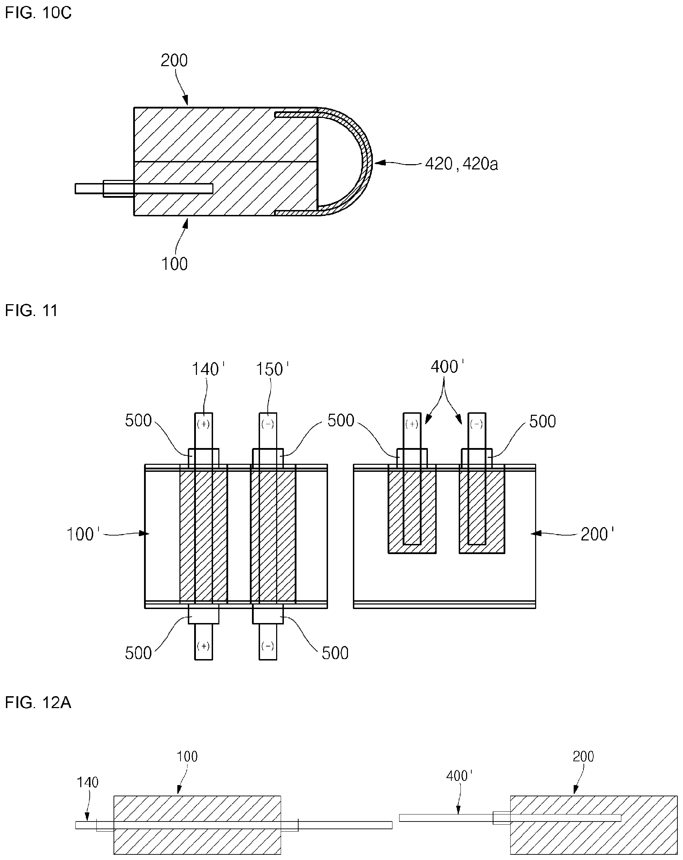

In addition, as shown in FIGS. 10A to 10D, each of the positive electrode connection tab 400 and the negative electrode connection tab 400 may be provided one by one (hereinafter, one-tab structure), and, as shown in FIGS. 8A to 9D, each of the positive electrode connection tab 400 and the negative electrode connection tab 400 may be provided in a pair (hereinafter, two-tab structure). When the positive electrode connection tab 400 and the negative electrode connection tab 400 are provided in pairs, a total of eight connection tabs 400 are disposed between the two electrode assemblies.

Each of the connection tabs 400 includes a substrate contact portion 410 electrically connected to an inner substrate of the first electrode assembly 100 or the second electrode assembly 200, and a connection portion 420 exposed to the outside of the first electrode assembly 100 or the second electrode assembly 200. However, the substrate contact portion 410 and the connection portion 420 are not formed separately, and one connection tab 400 is defined by dividing the substrate contact portion 410 and the connection portion 420 according to the position.

As shown in FIG. 5, the substrate contact portion 410 is inserted into the first electrode plate 110 or the second electrode plate 120 to make surface contact with the aluminum substrate or the copper substrate to be electrically connected. That is, the substrate contact portion 410 of the positive electrode connection tab 400 is electrically connected to the aluminum substrate, and the substrate contact portion 410 of the negative electrode connection tab 400 is electrically connected to the copper substrate. The positive electrode connection tab 400 is arranged in line with the first tab 140 which is a positive electrode tab, and the negative electrode connection tab 400 is arranged in line with the second tab 150 which is a negative electrode tab, and thus the first electrode assembly 100 and the second electrode assembly 200 are connected in parallel. The connection portion 420 integrally formed with the substrate contact portion 410 is exposed to the outside of the first electrode assembly 100 and the second electrode assembly 200.

The connection portion 420 is exposed to be disposed between the first electrode assembly 100 and the second electrode assembly 200. That is, the connection tabs 400 respectively connected to the first electrode assembly 100 and the second electrode assembly 200 are disposed so that the connection portions 420 face each other. The connecting portions 420 of the connection tab 400 facing each other may overlap each other by a predetermined section and are coupled to each other.

The connection portions 420 are coupled to enable electrical connection by a method such as welding. An insulating tape 500 may be attached onto the connection portions 420 to prevent short circuits between the connection portions 420 and the peripheries thereof. The insulating tape 500 may be attached to cover a larger area than a welding portion. In addition, the insulating tape 500 may not be attached to the connection portions 420, but insulators may be coupled together when the connection portions 420 are coupled to each other in a state in which the insulators are previously attached onto the connection portions 420.

When the secondary battery 10 is folded, the connection tab 400 is folded around a point on each of the connection portions 420 to which the insulating tape 500 is not attached (see line A-A of FIG. 5, which is hereinafter defined as a folding line). The attachment of the insulating tape 500 may be selectively applied.

The connection tab 400 may have a smaller thickness than the above-described first and second tabs 140 and 150 to allow the rechargeable battery 10 to be easily folded around the connection portions 420. Accordingly, the folding portions may be flexibly bent while maintaining electrical connection between the two electrode assemblies without increasing the thicknesses of the folding portions.

Hereinafter, the coupling state between the connection tab 400 of the first electrode assembly 100 and the second electrode assembly 200 will be described in detail (for convenience, the connection tab of the second electrode assembly is defined as 420a to be distinguished from the connection tab of the first electrode assembly).

FIGS. 8A to 10C are cross-sectional views illustrating various connection forms and folding processes of an electrode assembly according to an embodiment of the present invention.

As shown in FIGS. 8A to 8D, the secondary battery 10 according to an embodiment of the present invention may include an insulating tape 500 or a connection tab 400 having a two-tap structure in which an insulator is not provided (for convenience, only the positive electrode connection tab is shown in the drawings).

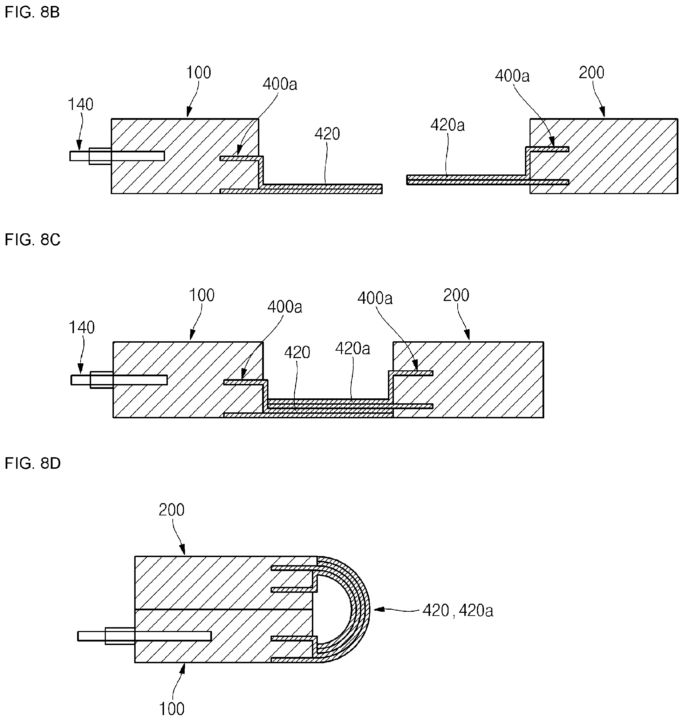

The connection portions 420 and 420a of the connection tab 400 are formed to have a sufficient length to maintain an electrical connection between the first electrode assembly 100 and the second electrode assembly 200 when the secondary battery 10 is folded (see FIG. 8D). Since the cover 320 is positioned between the first electrode assembly 100 and the second electrode assembly 200 when the secondary battery 10 is folded, in consideration of this, the length of the connection tab 400 is preferably formed.

In addition, since the connection portion 420 provided in the first electrode assembly 100 and the connection portion 420a provided in the second electrode assembly 200 should overlap each other to then be welded to each other, the upper connection portion 420, 420a is formed longer than the lower connection portion, on the basis of FIG. 8A.

The longer connecting portion 420, 420a is bent to be in close contact with the lower connection portion 420 (see FIG. 8B ), and the opposite connecting portions 420 and 420a are welded to each other to fix the two connecting portions 420 and 420a to each other (see FIG. 8C). Here, if the heights of the connection portions 420 and 420a are the same, the welding portion may be bent, and thus the positive electrode connection tab 400 of the second electrode assembly 200 may be formed to have a stepped height with respect to the positive electrode connection tab 400 of the first electrode assembly 100. Therefore, after welding, the lower surface of the welding area to which the two connecting portions 420 and 420a are welded can be maintained horizontally without being curved or bent.

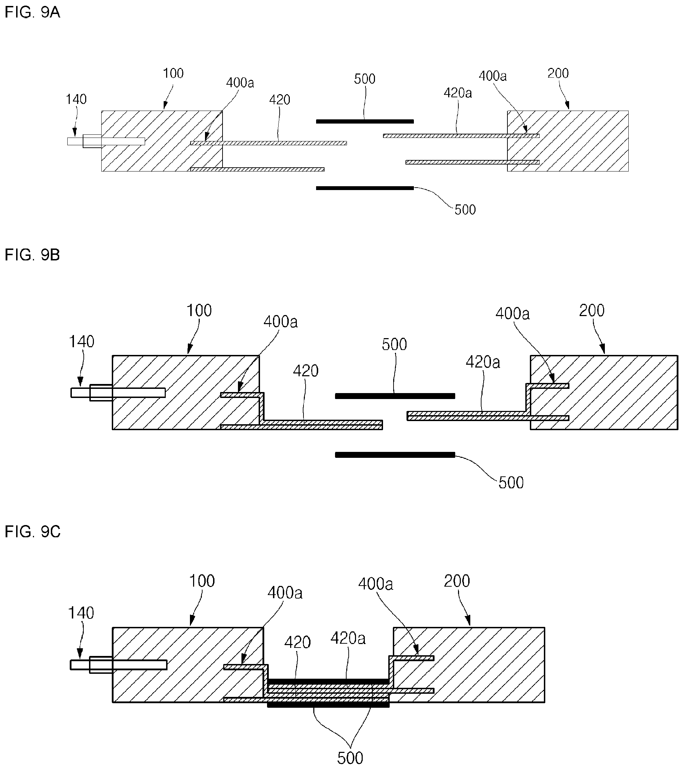

In addition, as shown in FIGS. 9A to 9D, the secondary battery 10 according to an embodiment of the present invention may include an insulating tape 500 or a connection tab 400 having a two-tab structure provided with insulators (for convenience, only a positive electrode connection tab is shown in the drawings).

In this case, the connection tab 400 may be coupled in the same structure as in the structures shown in FIGS. 8A to 8D, and the insulating tape 500 may be attached to the bonding portion or the insulators may be bonded to each other.

In addition, as shown in FIGS. 10A to 10C, the secondary battery 10 according to an embodiment of the present invention may include an insulating tape 500 or a connection tab 400 having a one-tab structure in which an insulator is not provided (for convenience, only a positive electrode connection tab is shown in the drawing).

In this case, opposite connection tabs 400 may be disposed to have a step difference with respect to each other in the same structure as in the structures shown in FIGS. 8A to 8D, and the insulating tape 500 may be attached to the bonding portion of the one-tab structure or the insulators may be bonded to each other (not shown).

In the above-described embodiment, the connection tab 400 having a smaller thickness than the first tab 140 and the second tab 150 has been described. Hereinafter, the secondary battery 10 according to another embodiment of the present invention will be described (The same reference numerals are used for the same components as in the above-described embodiment, but detailed descriptions of overlapping features will be omitted.).

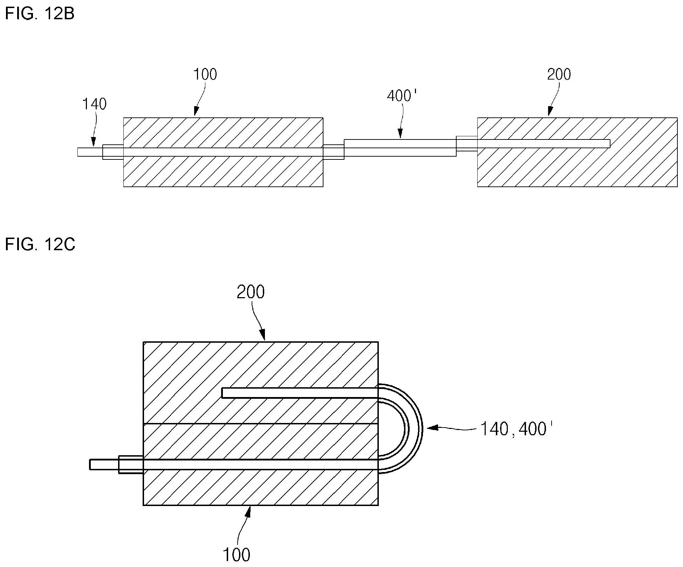

FIG. 11 is a plan view illustrating an electrode assembly of a secondary battery according to another embodiment of the present invention. FIGS. 12A to 12C are cross-sectional views illustrating various connection forms and folding processes of an electrode assembly according to another embodiment of the present invention.

As shown in FIG. 11, the secondary battery 10' according to another embodiment of the present invention has the same structure as the secondary battery 10 of the above-described embodiment, but, instead of a thin connection tab, a first electrode assembly 100' and a second electrode assembly 200' may be electrically connected by using a first tab 140' and a second tab 150'.

Here, the first tab 140' and the second tab 150' provided in the first electrode assembly 100' extend from one end to the other end of the first electrode assembly 100', so that portions thereof are exposed to the other end of the first electrode assembly 100'. Although a connection tab 400' is formed at the second electrode assembly 200', the connection tab 400' is a general electrode tab that is the same as the first tab 140' and the second tab 150', and is disposed to have a stepped height with respect to the first tab 140' and the second tab 150'. The connection tab 400' may be electrically connected to the first tab 140' and the second tab 150' by such a bonding method as welding.

As shown in FIGS. 12A to 12C, in the secondary battery 10' according to another embodiment of the present invention, the connection tab 400' is formed to have the same thickness as the first tab 140' and the second tab 150'. Although the connection tab 400' of FIGS. 12A to 12C is thicker than the connection tab 400 according to the embodiment of FIGS. 8A to 10C, the connection tab 400' itself has high rigidity and thus may not be bent. Accordingly, if the connection tab 400' has a sufficient length, folding of the secondary battery 10' can be achieved.

In the above-described embodiments, it has been described that the first electrode assembly and the second electrode assembly are connected in parallel as an example. However, the first electrode assembly and the second electrode assembly may also be connected in series (not shown).

In this case, all the structures are the same as when the first electrode assembly and the second electrode assembly are connected in parallel, but the positive electrode connection tab and the negative electrode connection tab of the connection tab are changed in positions.

In addition, a partition wall may be provided between the first electrode assembly and the second electrode assembly to prevent electrolytes contained therein from communicating with each other, thereby preventing a short circuit between the first electrode assembly and the second electrode assembly.

While the foregoing embodiment has been described to practice the battery pack according to the present disclosure, it should be understood that the embodiment described herein should be considered in a descriptive sense only and not for purposes of limitation, and various changes in form and details may be made therein without departing from the scope of the disclosure as defined by the following claims.

### INDUSTRIAL APPLICABILITY

The present invention can be used in the field of secondary batteries in which an electrode assembly is formed to be foldable.

## Claims

1. A secondary battery (10), comprising:
a first electrode assembly (100) equipped with a first tab (140) and a second tab (150);
a second electrode assembly (200) electrically connected to the first electrode assembly (100);
a plurality of connection tabs (400) which are disposed between the first electrode assembly (100) and the second electrode assembly (200) and which are connected thereto, and which electrically connect the first electrode assembly (100) and the second electrode assembly (200); and
a case (300) equipped with an accommodating portion (310) open at one side thereof and having an accommodating space (310a) to accommodate the first electrode assembly (100) and the second electrode assembly (200) with an electrolyte, and a cover (320) coupled to the open one side of the accommodating portion (310) and covering the open one side of the accommodating portion (310),
each of the first electrode assembly (100) and the second electrode assembly (200) comprises a first electrode plate (110, 210), a second electrode plate (120, 220), and a separator (130, 230) inserted between the first electrode plate (110, 210) and the second electrode plate (120, 220) and the first electrode assembly (100) further comprises the first tab (140) and the second tab (150) respectively electrically connected to the first electrode plate (110) and the second electrode plate (120) of the first electrode assembly (100),
the connection tab (400) includes a positive electrode connection tab (400) and a negative electrode connection tab (400) electrically connected to the first electrode plate (110, 210) and the second electrode plate (120, 220), respectively,
**characterized in that** the positive electrode connection tab (400) of the first electrode assembly (100) includes a substrate contact portion (410) connected to the first electrode plate (110) and a connection portion (420) integrally formed with the substrate contact portion (410) and exposed to one side of the first electrode assembly (100), the negative electrode connection tab (400) of the first electrode assembly (100) includes a substrate contact portion (410) connected to the second electrode plate (120) and a connection portion (420) integrally formed with the substrate contact portion (410) and exposed to one side of the first electrode assembly (100), the positive electrode connection tab (400) of the second electrode assembly (200) includes a substrate contact portion (410) connected to the first electrode plate (210) and a connection portion (420) integrally formed with the substrate contact portion and exposed to the first electrode assembly (100), and the negative electrode connection tab of the second electrode assembly (200) includes a substrate contact portion (410) connected to the second electrode plate (220) and a connection portion (420) integrally formed with the substrate contact portion (410) and exposed to the first electrode assembly (100),
wherein the case (300) is configured to be folded such that one side and the other side of the external surface of the cover (320) come together.

2. The secondary battery (10) of claim 1, configured such that upon folding of the case (300), folded portions of the cover (320) are in close contact with each other.

3. The secondary battery (10) of claim 2, wherein the case (300) further comprises a bonding portion (312) that extends along an edge of the open one side of the accommodating portion (310) so as to extend parallel with the cover (320) coupled thereto.

4. The secondary battery (10) of claim 3, configured such that when the case is folded, the bonding portion (312) and the cover (320) have cutout grooves (330) formed by cut end portions corresponding to the folded portions.

5. The secondary battery (10) of claim 1, wherein the first electrode plate (110, 210) is a positive electrode plate having an aluminum substrate, and the second electrode plate (120, 220) is a negative electrode plate having a copper substrate.

6. The secondary battery (10) of any one of the preceding claims, wherein the positive electrode connection tab (400) and the negative electrode connection tab (400) include one or two of positive and negative electrode connection tabs (400), respectively.

7. The secondary battery (10) of claim 6, wherein the connection tab (400) connected to the first electrode assembly (100) and the connection tab (400) connected to the second electrode assembly (200) overlap each other.

8. The secondary battery (10) of claim 7, wherein the connection tab (400) connected to the first electrode assembly (100) and the connection tab (400) connected to the second electrode assembly (200) are disposed to have a step difference from each other.

9. The secondary battery (10) of claim 7, wherein an insulating tape (500) is attached to a coupling portion of the connection tab (400) connected to the first electrode assembly (100) and the connection tab connected to the second electrode assembly (200).

10. The secondary battery (10) of claim 1, wherein the first electrode assembly (100) and the second electrode assembly (200) are connected to each other in parallel.

11. The secondary battery (10) of claim 1, wherein the first electrode assembly (100) and the second electrode assembly (200) are connected to each other in series, and the accommodating space (310a) is divided into two to accommodate the first electrode assembly (100) and the second electrode assembly (200), respectively, so as not to allow the electrolytes of the first electrode assembly (100) and the second electrode assembly (200) to communicate with each other.

## Patentansprüche

1. Sekundärbatterie (10), umfassend:
eine erste Elektrodenanordnung (100), die mit einer ersten Anschlussfahne (140) und einer zweiten Anschlussfahne (150) ausgestattet ist;
eine zweite Elektrodenanordnung (200), die elektrisch mit der ersten Elektrodenanordnung (100) verbunden ist;
eine Vielzahl von Verbindungsanschlussfahnen (400), die zwischen der ersten Elektrodenanordnung (100) und der zweiten Elektrodenanordnung (200) angeordnet sind und damit verbunden sind, und die die erste Elektrodenanordnung (100) und die zweite Elektrodenanordnung (200) elektrisch verbinden; und
ein Gehäuse (300), das mit einem an einer Seite davon offenen Aufnahmeteil (310) ausgestattet ist, das einen Aufnahmeraum (310a) zum Aufnehmen der ersten Elektrodenanordnung (100) und der zweiten Elektrodenanordnung (200) mit einem Elektrolyten aufweist, und mit einem Deckel (320), der mit der offenen Seite des Aufnahmeteils (310) gekoppelt ist und die offene Seite des Aufnahmeteils (310) abdeckt,
wobei jede der ersten Elektrodenanordnung (100) und der zweiten Elektrodenanordnung (200) eine erste Elektrodenplatte (110, 210), eine zweite Elektrodenplatte (120, 220) und einen Separator (130, 230), der zwischen der ersten Elektrodenplatte (110, 210) und der zweiten Elektrodenplatte (120, 220) eingesetzt ist, umfasst, und die erste Elektrodenanordnung (100) weiter die erste Anschlussfahne (140) und die zweite Anschlussfahne (150) umfasst, die jeweils elektrisch mit der ersten Elektrodenplatte (110) bzw. der zweiten Elektrodenplatte (120) der ersten Elektrodenanordnung (100) verbunden sind,
wobei die Verbindungsanschlussfahne (400) eine positive Elektrodenverbindungsanschlussfahne (400) und eine negative Elektrodenverbindungsanschlussfahne (400) einschließt, die jeweils elektrisch mit der ersten Elektrodenplatte (110, 210) bzw. der zweiten Elektrodenplatte (120, 220) verbunden sind,
**dadurch gekennzeichnet, dass**
die positive Elektrodenverbindungsanschlussfahne (400) der ersten Elektrodenanordnung (100) einen Substratkontaktabschnitt (410), der mit der ersten Elektrodenplatte (110) verbunden ist, und einen mit dem Substratkontaktabschnitt (410) einstückig gebildeten und einseitig zur ersten Elektrodenanordnung (100) freiliegenden Verbindungsabschnitt (420) einschließt, wobei die negative Elektrodenverbindungsanschlussfahne (400) der ersten Elektrodenanordnung (100) einen mit der zweiten Elektrodenplatte (120) verbundenen Substratkontaktabschnitt (410) und einen mit dem Substratkontaktabschnitt (410) einstückig gebildeten und einseitig zur ersten Elektrodenanordnung (100) freiliegenden Verbindungsabschnitt (420) einschließt, wobei die positive Elektrodenverbindungsanschlussfahne (400) der zweiten Elektrodenanordnung (200) einen mit der ersten Elektrodenplatte (210) verbundenen Substratkontaktabschnitt (410) und einen mit dem Substratkontaktabschnitt einstückig gebildeten und zur ersten Elektrodenanordnung (100) freiliegenden Verbindungsabschnitt (420) einschließt und die negative Elektrodenverbindungsanschlussfahne der zweiten Elektrodenanordnung (200) einen Substratkontaktabschnitt (410), der mit der zweiten Elektrodenplatte (220) verbunden ist, und einen mit dem Substratkontaktabschnitt (410) einstückig gebildeten und zur ersten Elektrodenanordnung (100) freiliegenden Verbindungsabschnitt (420) einschließt,
wobei das Gehäuse (300) so konfiguriert ist, dass es so gefaltet werden kann, dass eine Seite und die andere Seite der Außenfläche des Deckels (320) aufeinandertreffen.

2. Sekundärbatterie (10) nach Anspruch 1, die so konfiguriert ist, dass beim Zusammenfalten des Gehäuses (300) zusammengefaltete Abschnitte der Abdeckung (320) miteinander in engem Kontakt stehen.

3. Sekundärbatterie (10) nach Anspruch 2, wobei das Gehäuse (300) weiter einen Verbindungsabschnitt (312) umfasst, der sich entlang einer Kante der offenen Seite des Aufnahmeabschnitts (310) so erstreckt, dass er sich parallel zu der damit gekoppelten Abdeckung (320) erstreckt.

4. Sekundärbatterie (10) nach Anspruch 3, die so konfiguriert ist, dass, wenn das Gehäuse zusammengefaltet wird, der Verbindungsabschnitt (312) und die Abdeckung (320) ausgeschnittene Rillen (330) aufweisen, die durch ausgeschnittene Endabschnitte gebildet werden, die den gefalteten Abschnitten entsprechen.

5. Sekundärbatterie (10) nach Anspruch 1, wobei die erste Elektrodenplatte (110, 210) eine positive Elektrodenplatte ist, die ein Aluminiumsubstrat aufweist, und die zweite Elektrodenplatte (120, 220) eine negative Elektrodenplatte ist, die ein Kupfersubstrat aufweist.

6. Sekundärbatterie (10) nach einem der vorstehenden Ansprüche, wobei die positive Elektrodenverbindungsanschlussfahne (400) und die negative Elektrodenverbindungsanschlussfahne (400) jeweils eine oder zwei von positiven und negativen Elektrodenverbindungsanschlussfahnen (400) einschließen.

7. Sekundärbatterie (10) nach Anspruch 6, wobei sich die mit der ersten Elektrodenanordnung (100) verbundene Verbindungsanschlussfahne (400) und die mit der zweiten Elektrodenanordnung (200) verbundene Verbindungsanschlussfahne (400) gegenseitig überlappen.

8. Sekundärbatterie (10) nach Anspruch 7, wobei die mit der ersten Elektrodenanordnung (100) verbundene Verbindungsanschlussfahne (400) und die mit der zweiten Elektrodenanordnung (200) verbundene Verbindungsanschlussfahne (400) so angeordnet sind, dass sie einen Stufenunterschied voneinander aufweisen.

9. Sekundärbatterie (10) nach Anspruch 7, wobei ein Isolierband (500) an einem Kopplungsabschnitt der Verbindungsanschlussfahne (400), die mit der ersten Elektrodenanordnung (100) verbunden ist, und der Verbindungsanschlussfahne, die mit der zweiten Elektrodenanordnung (200) verbunden ist, angebracht ist.

10. Sekundärbatterie (10) nach Anspruch 1, wobei die erste Elektrodenanordnung (100) und die zweite Elektrodenanordnung (200) parallel zueinander verbunden sind.

11. Sekundärbatterie (10) nach Anspruch 1, wobei die erste Elektrodenanordnung (100) und die zweite Elektrodenanordnung (200) in Reihe miteinander verbunden sind und der Aufnahmeraum (310a) in zwei unterteilt ist, um jeweils die erste Elektrodenanordnung (100) und die zweite Elektrodenanordnung (200) aufzunehmen, sodass die Elektrolyten der ersten Elektrodenanordnung (100) und der zweiten Elektrodenanordnung (200) nicht miteinander kommunizieren können.

## Revendications

1. Batterie secondaire (10), comprenant :
un premier ensemble d'électrodes (100) équipé d'une première languette (140) et d'une seconde languette (150) ;
un second ensemble d'électrodes (200) connecté électriquement au premier ensemble d'électrodes (100) ;
une pluralité de languettes de connexion (400) disposées entre le premier ensemble d'électrodes (100) et le second ensemble d'électrodes (200) et qui y sont connectées, et qui connectent électriquement le premier ensemble d'électrodes (100) et le second ensemble d'électrodes (200) ; et
un boîtier (300) équipé d'une partie de logement (310) ouverte sur un côté de celui-ci et présentant un espace de logement (310a) pour loger le premier ensemble d'électrodes (100) et le second ensemble d'électrodes (200) avec un électrolyte, et un couvercle (320) couplé au côté ouvert de la partie de logement (310) et recouvrant le côté ouvert de la partie de logement (310),
chacun du premier ensemble d'électrodes (100) et du second ensemble d'électrodes (200) comprend une première plaque d'électrode (110, 210), une seconde plaque d'électrode (120, 220) et un séparateur (130, 230) inséré entre la première plaque d'électrode (110, 210) et la seconde plaque d'électrode (120, 220), et le premier ensemble d'électrodes (100) comprend en outre la première languette (140) et la seconde languette (150) respectivement connectées électriquement à la première plaque d'électrode (110) et à la seconde plaque d'électrode (120) du premier ensemble d'électrodes (100),
la languette de connexion (400) inclut une languette de connexion d'électrode positive (400) et une languette de connexion d'électrode négative (400) connectées électriquement à la première plaque d'électrode (110, 210) et à la seconde plaque d'électrode (120, 220), respectivement,
**caractérisée en ce que**
la languette de connexion d'électrode positive (400) du premier ensemble d'électrodes (100) inclut une partie de contact avec le substrat (410) connectée à la première plaque d'électrode (110) et une partie de connexion (420) formée d'un seul tenant avec la partie de contact avec le substrat (410) et exposée à un côté du premier ensemble d'électrodes (100), la languette de connexion d'électrode négative (400) du premier ensemble d'électrodes (100) inclut une partie de contact avec le substrat (410) connectée à la seconde plaque d'électrode (120) et une partie de connexion (420) formée d'un seul tenant avec la partie de contact avec le substrat (410) et exposée à un côté du premier ensemble d'électrodes (100), la languette de connexion d'électrode positive (400) du second ensemble d'électrodes (200) inclut une partie de contact avec le substrat (410) connectée à la première plaque d'électrode (210) et une partie de connexion (420) formée d'un seul tenant avec la partie de contact avec le substrat et exposée au premier ensemble d'électrodes (100), et la languette de connexion d'électrode négative du second ensemble d'électrodes (200) inclut une partie de contact avec le substrat (410) connectée à la seconde plaque d'électrode (220) et une partie de connexion (420) formée d'un seul tenant avec la partie de contact avec le substrat (410) et exposée au premier ensemble d'électrodes (100),
dans laquelle le boîtier (300) est configuré pour être plié de telle sorte qu'un côté et l'autre côté de la surface externe du couvercle (320) se rejoignent.

2. Batterie secondaire (10) selon la revendication 1, configurée de telle sorte que, lors du pliage du boîtier (300), les parties pliées du couvercle (320) soient en contact étroit l'une avec l'autre.

3. Batterie secondaire (10) selon la revendication 2, dans laquelle le boîtier (300) comprend en outre une partie de liaison (312) qui s'étend le long d'un bord du côté ouvert de la partie de logement (310) de manière à s'étendre parallèlement au couvercle (320) couplé à celle-ci.

4. Batterie secondaire (10) selon la revendication 3, configurée de telle sorte que lorsque le boîtier est plié, la partie de liaison (312) et le couvercle (320) présentent des rainures découpées (330) formées par des parties d'extrémité coupées correspondant aux parties pliées.

5. Batterie secondaire (10) selon la revendication 1, dans laquelle la première plaque d'électrode (110, 210) est une plaque d'électrode positive présentant un substrat en aluminium, et la seconde plaque d'électrode (120, 220) est une plaque d'électrode négative présentant un substrat en cuivre.

6. Batterie secondaire (10) selon l'une quelconque des revendications précédentes, dans laquelle la languette de connexion d'électrode positive (400) et la languette de connexion d'électrode négative (400) incluent une ou deux languettes de connexion d'électrode positive et négative (400), respectivement.

7. Batterie secondaire (10) selon la revendication 6, dans laquelle la languette de connexion (400) connectée au premier ensemble d'électrodes (100) et la languette de connexion (400) connectée au second ensemble d'électrodes (200) se chevauchent.

8. Batterie secondaire (10) selon la revendication 7, dans laquelle la languette de connexion (400) connectée au premier ensemble d'électrodes (100) et la languette de connexion (400) connectée au second ensemble d'électrodes (200) sont disposées pour présenter un décalage en hauteur l'une par rapport à l'autre.

9. Batterie secondaire (10) selon la revendication 7, dans laquelle un ruban isolant (500) est fixé à une partie de couplage de la languette de connexion (400) connectée au premier ensemble d'électrodes (100) et à la languette de connexion connectée au second ensemble d'électrodes (200).

10. Batterie secondaire (10) selon la revendication 1, dans laquelle le premier ensemble d'électrodes (100) et le second ensemble d'électrodes (200) sont connectés l'un à l'autre en parallèle.

11. Batterie secondaire (10) selon la revendication 1, dans laquelle le premier ensemble d'électrodes (100) et le second ensemble d'électrodes (200) sont connectés l'un à l'autre en série, et l'espace de logement (310a) est divisé en deux pour loger le premier ensemble d'électrodes (100) et le second ensemble d'électrodes (200), respectivement, afin d'empêcher les électrolytes du premier ensemble d'électrodes (100) et du second ensemble d'électrodes (200) de communiquer entre eux.
